Europäisches Patentamt

European Patent Office

Office européen des brevets

(19)

(11) Veröffentlichungsnummer: **0 306 807 B1**

## EUROPÄISCHE PATENTSCHRIFT

(45) Veröffentlichungstag der Patentschrift: **29.04.92**

(51) Int. Cl.⁵: **B01D 45/08**

(21) Anmeldenummer: **88114114.7**

(22) Anmeldetag: **30.08.88**

(54) **Vorrichtung zum Reinigen von gasförmigen Fluiden.**

(30) Priorität: **05.09.87 DE 8712092 U**
**16.03.88 DE 8803568 U**

(43) Veröffentlichungstag der Anmeldung:
**15.03.89 Patentblatt 89/11**

(45) Bekanntmachung des Hinweises auf die
Patenterteilung:
**29.04.92 Patentblatt 92/18**

(84) Benannte Vertragsstaaten:
**AT BE CH DE ES FR GB IT LI LU NL SE**

(56) Entgegenhaltungen:
**EP-A- 0 206 204**
**AT-B- 329 015**
**FR-A- 2 489 167**
**GB-A- 2 135 596**

(73) Patentinhaber: **Gutermuth, Paul, sen.**
**Augustastrasse 48**
**W-6456 Langenselbold(DE)**

(72) Erfinder: **Gutermuth, Paul, sen.**
**Augustastrasse 48**
**W-6456 Langenselbold(DE)**

(74) Vertreter: **Stoffregen, Hans-Herbert, Dr.**
**Dipl.-Phys.**
**Patentanwalt, Salzstrasse 11 a, Postfach 21**
**44**
**W-6450 Hanau (Main) 1(DE)**

**Beschreibung**

Die Erfindung bezieht sich auf eine Vorrichtung zum Reinigen von gasförmigen Fluiden wie Aerosolen und Ölnebeln durch Abscheiden von in diesen vorhandenen Schmutzpartikeln umfassend zur Bildung einer Abscheiderfläche zumindest in zwei gegenüberliegenden Reihen angeordnete im Querschnitt offene, rinnenförmige erste und zweite Profilteile, wobei vorzugsweise die freien Längskanten der Ränder der ersten Profilteile die freien Längskanten der Ränder der zweiten Profilteile überlappen und von den Innenflächen in Längsrichtung verlaufende Vorsprünge ausgehen, wobei die Vorrichtung einen geschlossenen Körper mit Fluideinström- und -ausströmöffnungen umfaßt, dessen Außenflächen zumindest bereichsweise durch die Abscheiderflächen gebildet sind, die ihrerseits die Fluideinströmöffnungen sind.

Aus der FR-A-2 489 167 ist ein Abscheider für insbesondere Abgase zu entnehmen, der ortsfest angeordnete Profilelemente umfaßt. Ein Reinigen oder Austausch dieser ist mit erheblichem Aufwand verbunden.

Ein Dampfabscheider mit Düsen- und Prallanordnung als Abscheiderelemente ist aus der GB-A-135 596 bekannt. Die Abscheiderelemente sind gleichfalls ortsfest in einem Gehäuse angeordnet. Eine Vorrichtung zum Abscheiden einer Flüssigkeit aus einem Gas-Flüssigkeits-Gemisch nach der AT-B-329 015 umfaßt konzentrisch zu einem Einlaßkanal ortsfest angeordnete Winkelprofile, die von dem Gemisch durchströmt werden.

Eine weitere Abscheidervorrichtung ist der EP-A-0 206 204 zu entnehmen. Die Profilteile selbst weisen neben der rinnenförmigen Struktur jeweils einen im Scheitelbereich der Innenfläche ausgehenden sich in Richtung der Profilteilöffnung und entlang seiner Längsachse verlaufenden Vorsprung auf. Hierdurch ergibt sich der Vorteil, daß weitere Kammerbildungen zur Beeinflussung der Strömungsgeschwindigkeit der durch den Abscheider strömenden Fluide erfolgt. Als Folge wird der Abscheidegrad unerwarteterweise stark erhöht. Entsprechende Abscheidervorrichtungen haben zu optimalen Ergebnissen bei der Reinigung von insbesondere Kühlfluiden, Ölnebeln, Fettnebeln oder ganz allgemein Schmutzpartikel aufweisender Luft geführt, so daß nahezu unbegrenzte Einsatzmöglichkeiten gegeben sind. Dabei muß selbstverständlich die Größe der Abscheiderfläche der in Reihen angeordneten Profilteile auf den Fluiddurchsatz abgestimmt werden. In einigen Anwendungsfällen ist hierzu jedoch der zur Verfügung stehende Raum dann eingeschränkt, wenn z.B. vorhandene Einrichtungen mit entsprechenden Abscheidervorrichtungen nachgerüstet werden sollen oder bei Neuinstallationen nur ein beschränkter Platz zur Verfügung steht.

Aufgabe der vorliegenden Erfindung ist es u.a., eine Vorrichtung zum Reinigen gasförmiger Fluide, d.h. eine Vorrichtung zum Abscheiden von in gasförmigen Fluiden vorhandenen Schmutzpartikeln der eingangs genannten Art so weiterzubilden, daß die Möglichkeit einer einfachen Reinigung der Abscheiderfläche bzw. der diese bildenden Elemente am Ort der Vorrichtung möglich ist. Auch soll bei gleichbleibenden Abluftmengen mit konstruktiv einfachen Mitteln die Anströmgeschwindigkeit regulierbar sein.

Die Aufgabe wird erfindungsgemäß im wesentlichen dadurch gelöst, daß der Körper drehbar gelagert und ein Quader oder eine Mehrkantsäule ist, dessen Seitenflächen zumindest teilweise als Abscheiderflächen ausgebildet sind. Dabei kann eine Stirnfläche des Körpers eine Blindfläche und dessen andere Stirnfläche die Fluidausströmöffnung aufweisen. Durch die erfindungsgemäße Lehre ist eine gute Zugänglichkeit der Profilelemente zu deren Reinigung und gegebenenfalls Austausch sichergestellt. Auch kann eine problemlose Anpassung an unterschiedliche Anströmgeschwindigkeiten der zu reinigenden Fluide erfolgen.

Insbesondere kann die Vorrichtung ein Gehäuse aufweisen, in dem zumindest zwei zueinander beabstandete Abscheiderflächen angeordnet sind, und daß das Gehäuse eine Fluideinström- und eine -ausströmöffnung aufweist, von denen eine außerhalb und die andere innerhalb des von den Abscheiderflächen in dem Gehäuse umgebenden Raums verläuft. Bevorzugterweise bilden vier Abscheiderflächen die Seitenflächen eines Quaders, der koaxial zu der Längsachse des vorzugsweise ebenfalls als Quader ausgebildeten Gehäuses angeordnet ist, wobei die Kanten der Quader vorzugsweise um 45° versetzt zueinander verlaufen. Erfindungsgemäß wird demzufolge eine Abscheidervorrichtung vorgeschlagen, die ein als Kanal ausgebildetes Gehäuse aufweist, in dem koaxial die eine Umhüllende bildenden Abscheiderflächen angeordnet sind, die vorzugsweise von außen her von dem zu reinigen Fluid durchströmt sind.

Zur Bildung der Fluideintrittsöffnung ist bevorzugterweise der von den Abscheiderflächen umgebende Raum stirnseitig abgedeckt, z.B. durch einen Anströmkonus, um einen unnötigen Widerstandsaufbau für die in das Gehäuse einströmenden Fluide zu vermeiden und die Abscheiderflächen gleichmäßig zu beaufschlagen. Um eine optimale Reinigung der Fluide zu ermöglichen, verlaufen die Längsachsen der Profilteile senkrecht zu der Längsachse des Gehäuses. Die zu reinigenden Fluide sind hierdurch gezwungen, die Profilelemente im wesentlichen senkrecht zu ihren Längsachsen zu durchströmen.

Bei horizontaler oder schräger Anordnung der erfindungsgemäßen Abscheidervorrichtung ergibt sich zusätzlich der Vorteil, daß die in den Profilteilen abgeschiedenen Partikel, aufgrund der Schwerkraft nach unten fließen, und zwar vorzugsweise in den Bereich von aneinanderstoßenden Abscheiderflächen. Dort wirken dann die aufeinanderstoßenden Kanten von die Profile aufnehmenden Aufnahmeelementen wie Rahmen als Sammelrinne, in der Durchbrechungen zum Ableiten der abgeschiedenen Fluide wie z.B. Öl vorgesehen sind. Die von den Abscheiderflächen abgeschiedenen Fluide werden von einer bodenseitigen Fläche oder Begrenzung wie Bühne des Gehäuses bzw. einer die Abscheiderflächen aufnehmenden Halterung gesammelt, von der über eine Ablaßöffnung die abgeschiedenen Fluide ableitbar sind. Dabei ist die Ablaßöffnung im hinteren Bereich des Gehäuses bzw. der Halterung angeordnet, da aufgrund des Druckgefälles die abgeschiedenen Partikel in diesen Bereich gedrückt werden. Der Abfluß selbst kann einen Siphon aufweisen.

Im weiterer hervorzuhebender Ausgestaltung der Erfindung sind die Abscheiderflächen mit einem koxial zur Gehäuselängsachse verlaufenden Stützelement wie Stützrohr verbunden, das seinerseits zentrierbar und drehbar gelagert an der Gehäuseinnenwandung abgestützt ist. Hierdurch ergibt sich der Vorteil, daß der von den Abscheiderflächen gebildete Körper gedreht werden kann, um im gewünschten Umfang eine Abscheiderfläche auf eine Revisionsöffnung auszurichten. Hierdurch ergibt sich der Vorteil, daß ohne Ausbauen der Abscheiderflächen aus dem Gehäuse eine Wartung und Pflege, aber auch eine Kontrolle und/oder Austausch bzw. Erneuerung einzelner Profilteile möglich ist.

Die erfindungsgemäße Abscheidervorrichtung kann in bestehende Abluftkanalsysteme eingesetzt werden, ohne daß aufwendige Umbaumaßnahmen erforderlich sind. Dadurch, daß die Abscheiderflächen in Strömungsrichtung verlaufen und dennoch senkrecht oder im wesentlichen senkrecht von den zu reinigenden Fluiden durchströmt werden, ergibt sich der Vorteil, daß die Querschnittsfläche des zu durchströmenden Gehäuses erheblich kleiner als eine erforderliche Abscheiderfläche sein muß, um eine Reinigung von Fluiden vorzunehmen. Dabei können bei gleicher Gehäuseeintrittsfläche Abscheiderflächen verschiedener Größe aufgenommen werden, indem die Länge des Gehäuses variiert wird, so daß mit einer Baueinheit unterschiedliche Fluiddurchsätze gereinigt werden können.

Sind bevorzugterweise vier zu den Seitenwandungen eines Quaders gebildete Abscheiderflächen vorgesehen, so ist selbstverständlich auch eine hiervon abweichende Anzahl möglich. So können die Abscheiderflächen die Seitenfläche einer Dreikantsäule bilden, die gegebenenfalls in einem als Hohlzylinder ausgebildeten Gehäuse angeordnet ist. Eine solche Ausführungsform stellt einen selbständigen erfinderischen Lösungsgedanken dar.

Sofern der zumindest bereichsweise von den Abscheiderflächen gebildete Körper nicht von einem Gehäuse umgeben ist, ergibt sich insbesondere der Vorteil einer problemlosen Reinigung vor Ort. So kann z.B. der einen Quader bildende Körper auf einer Bühne angeordnet und um seine Längsachse drehbar angeordnet sein. Die zu reinigende Luft durchströmt sodann von außen den Körper, um anschließend über eine Stirnfläche abgeführt zu werden. Die gegenüberliegende Stirnfläche ist dann als Blindfläche ausgebildet. Durch die drehbare Anordnung des Körpers besteht nun die Möglichkeit, die Außenflächen der Profilelemente z.B. mit einem Hochdruckreinigungsgerät zu säubern. Da die einzelnen Profilelemente lösbar von an und für sich bekannten Halterungen, wie sie z.B. in der Europäischen Patentanmeldung EP-A 0 206 204 in der Fig. 1 oder 21 klar erkennbar dargestellt sind, gehalten werden, ist es nur erforderlich, anschließend die Profilelemente zu lösen, um dann die von außen nicht zugänglichen Bereiche zu reinigen. Der Innenraum des Körpers selbst braucht nicht gesäubert zu werden, da die in Reihen angeordneten Profilelemente das durchströmende Gas im hinreichenden Umfang reinigt.

Nach einem eigenständigen Lösungsvorschlag besteht ferner die Möglichkeit, die Anströmgeschwindigkeit bie gleichbleibender Abluft dadurch zu regulieren, daß die Abscheiderflächen bereichsweise abgedeckt werden. Hierzu kann ein sich über mehrere Einzelprofilelemente erstreckendes Abdeckblech vorgesehen sein, das in bezug auf die Seitenränder so geformt ist, daß diese den ansonsten an den diesbezüglichen Stellen angeordneten Profilelementen entsprechen, so daß sich für die zu reinigende Abluft gleiche Verhältnisse, insbesondere die die erhöhte Abscheidung bewirkenden zusätzlichen Kammern ergeben. Ferner verlaufen im Randbereich von der Innenseite der Abdeckungen Vorsprünge, die ebenfalls denen der einzelnen Profilelemente entsprechen und somit auch in die für diese vorgesehenen Halterungen einbringbar sind.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines in der Zeichnung dargestellten Ausführungsbeispiels.

Es zeigen:

Fig. 1    eine Seitenansicht einer von einem Gehäuse aufgenommenen Vorrichtung zum Abscheiden von Fluiden mit weggelassenen Gehäusewandungen,

Fig. 2    die Vorrichtung nach Fig. 1 in Vorderansicht,

Fig. 3    eine Vorrichtung ohne Gehäuse,

Fig. 4    eine Detaildarstellung einer Abscheiderfläche und

Fig. 5    eine weitere Ausführungsform einer Vorrichtung zum Abscheiden von Fluiden.

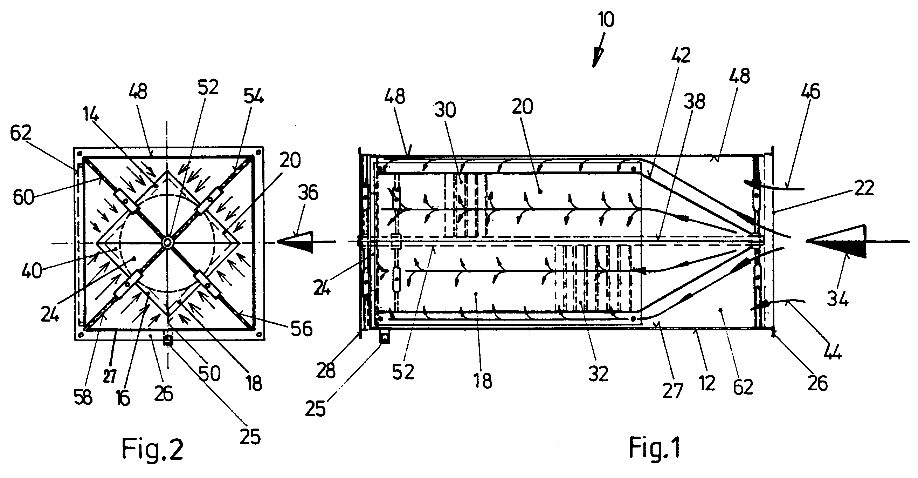

In den Fig. 1 und 2 ist eine Vorrichtung (10) zum Reinigen von gasförmigen Fluiden bzw. zum Abscheiden von in diesen vorhandenen Schmutzpartikeln dargestellt, die ein Gehäuse (12) und in diesem angeordnete Abscheiderflächen (14), (16), (18) und (20) aufweist. Das Gehäuse (12) zeigt Quaderform mit als Eintrittsöffnung (22) und Austrittsöffnung (24) ausgebildeten offenen Stirnwandungen. Die Stirnränder des Gehäuses (12) weisen Flansche (26) und (28) auf, um z.B. in ein bestehendes Entlüftungssystem wie Entlüftungskanal eingebaut zu werden.

Die Abscheiderflächen (14), (16), (18) und (20) bestehen aus in Reihen angeordneten im Querschnitt offenen, rinnenförmigen ersten und zweiten Profilteilen, wobei vorzugsweise die freien Längskanten der Ränder der ersten Profilteile die freien Längskanten der Ränder der zweiten Profilteile überlappen. Ferner können im Scheitelbereich der Innenfläche sich in Richtung der Profilteilöffnung und entlang seiner Längsachse verlaufende Vorsprünge angeordnet sein, wodurch zum einen die Fluidströmungsgeschwindigkeit beeinflussende zusätzliche Kammer ausgebildet und zum anderen Befestigungen für Halterungen zur Verfügung gestellt werden, um die Einzelprofilteile lösbar, jedoch positionsgenau aufzunehmen. Mit anderen Worten weisen die in Reihen angeordneten Profilteile, die die Abscheiderflächen (14), (16), (18) und (20) bilden, eine Konstruktion auf, wie sie z.B. der Europäischen Patentanmeldung 0 206 204 und dort insbesondere den Fig. 1 und 2 zu entnehmen sind. Ungeachtet dieser speziellen Ausführungsform stellt die Europäische Patentanmeldung 0 206 204 eine ergänzende Offenbarung zu der vorliegenden Beschreibung dar. Mit anderen Worten werden durch die durch die ineinandergreifenden Profile und deren Vorsprünge gebildeten Kammern die Fluide in Abhängigkeit von den Durchtrittsquerschnittsflächen abwechselnd beschleunigt bzw. verlangsamt und umgekehrt, wodurch sich der Abscheide- und damit Reinigungseffekt ergibt.

Die Profilteile (30), (32) sind in bezug auf die durch die Pfeile (34) und (36) angedeutete Strömungsrichtung derart in dem Gehäuse (12) angeordnet, daß deren Längsachsen senkrecht zu der Längsachse (38) des Gehäuses (12) und damit zur Strömungsrichtung verläuft. Hierdurch ist ein die Reinigung bewirkendes optimales Durchdringen der Abscheiderflächen (14), (16), (18), (20) gewährleistet.

Um sicherzustellen, daß die Abscheiderflächen (14), (16), (18) und (20) nicht umströmt, also umgangen werden können, ist der von den Abscheiderflächen (14), (16), (18) und (20) umfaßte Innenraum (40) von einem Anströmelement wie Anströmkonus (42) abgedeckt, wodurch die zu reinigenden Fluiden (angedeutet durch die Pfeile (44) und (46)) zunächst entlang der Innenwandung (48) des Gehäuses geführt werden, um dann durch die von den Profilteilen (30) und (32) gebildeten Abscheiderflächen (14), (16), (18) und (20) zu strömen. Die sodann gereinigten Fluide gelangen in den Innenraum (40), um anschließend über die Austrittsöffnung (24) aus dem Gehäuse (12) auszutreten.

Die Profilteile werden in nicht näher bezeichneten Aufnahmeteilen wie Rahmen befestigt, die die äußere Begrenzung der Abscheiderflächen (14), (16), (18), (20) bilden. Die aneinandergrenzenden Kanten bilden dann quasi eine Sammelrinne (50), um in den Abscheiderflächen (14), (16), (18), (20) abgeschiedene Medien, die aufgrund der Schwerkraft zu der Sammelrinne fließen, zu sammeln und anschließend über Durchbrüche auf die Innenfläche (27) abzuleiten, von der aus die ausgeschiedenen Medien über eine im hinteren Bereich vorhandene Ablaßöffnung (25) ableitbar sind.

Die Abscheiderflächen (14), (16), (18) und (20) sind mit ihren nicht näher bezeichneten die Halterungen für die Profilteile (30), (32) aufnehmenden Aufnahmeteilen wie Profileisten mit einem koaxial zur Längsachse (38) des Gehäuses (12) verlaufendem Stützrohr (52) verbunden, das seinerseits drehbar über längenverstellbare Rohrelemente (54), (56), (58), (60) zentrierbar an der Gehäuseinnenwandung, und zwar in dessen Ecken, abgestützt ist. Hierzu sind die Rohrelemente (54), (56), (58) und (60) mit Hilfe einer nicht näher bezeichneten Gegengewindehülse längenverstellbar derart ausgebildet, daß die gewünschte Zentrierung des Stützrohres (52) gewährleistet ist. Durch die Drehbarkeit des Stützrohres (52) und damit der Abscheiderflächen (14), (16), (18), (20) ist die Möglichkeit gegeben, eine Seite, im Ausführungsbeispiel die Seite (62) als Revisionsdeckel auszubilden, um in diesem Bereich vorhandene Profilteile (30), (32) zu überprüfen und/oder zu erneuern. Es ergibt sich demzufolge der gravierende Vorteil, daß ein Ausbau der Abscheiderflächen (14), (16), (18), (20) bei Revisionsarbeiten nicht erforderlich ist. Vielmehr müssen nur die Abscheiderflächen (14), (16), (18), (20) zu der Revisionsöffnung (62) gedreht werden, um die erforderlichen Arbeiten vornehmen zu können.

Im Bereich der Eintritts- und Austrittsöffnung (22) bzw. (24) sind selbstverständlich nicht näher bezeichnete und dargestellte Dichtelemente vorgesehen, um zu gewährleisten, daß der zu reinigende Fluidstrom vollständig die Abscheiderflächen (14), (16), (18), (20) durchströmt, damit aus der Austrittsöffnung (24) tatsächlich gereinigtes Fluid ausströmt.

Beispielhaft seien Abmessungen der Vorrichtung (10) wie folgt genannt:
Querschnitt der Stirnfläche des quaderförmigen Gehäuses (12): 900 bis 1.600 cm$^2$
Länge des Gehäuses 100cm. Bei entsprechenden Abmessungen ergibt sich eine Gesamtabscheiderfläche von 8.000 bis 10.000 cm$^2$.

Auch ist hervorzuheben, daß selbstverständlich Einrichtungen vorgesehen sein können, über die Feuchtigkeit, Heißluft und/oder Flüssigkeiten auf die einzelnen Profilelemente abgebbar sind, um so abgeschiedene Partikel wie z.B. Salze oder Wachspartikel zu lösen und damit zu entfernen.

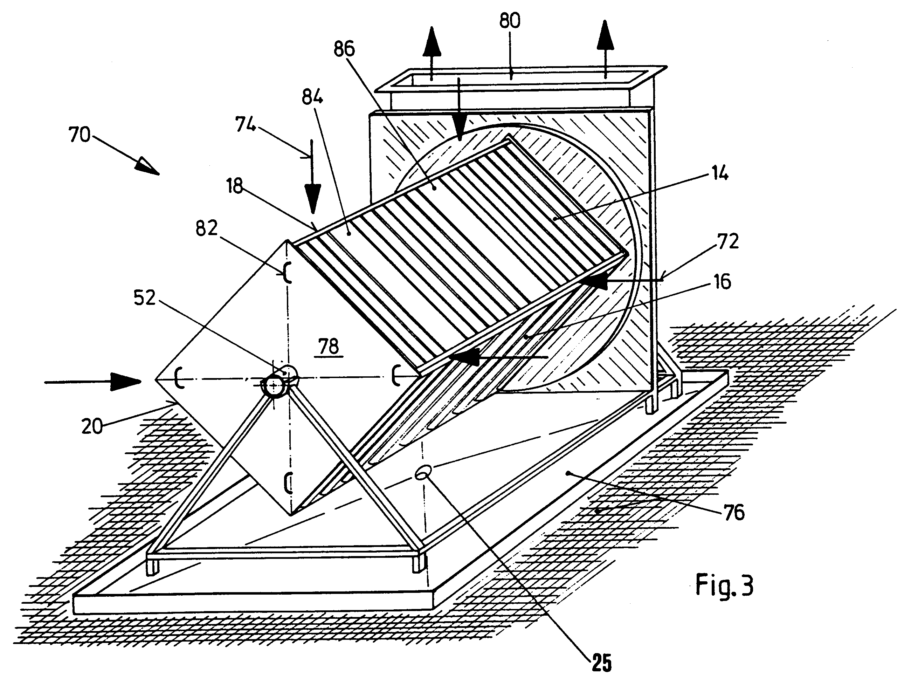

Der Fig. 3 ist eine hervorzuhebende Ausführungsform der Erfindung zu entnehmen, wobei für gleiche Elemente gleiche Bezugszeichen benutzt werden.

Im Gegensatz zu dem Ausführungsbeispiel nach den Fig. 1 und 2 wird der von den Abscheiderflächen (14), (16), (18) und (20) gebildete Körper (70) nicht von einem Gehäuse umgeben. Vielmehr ist der Körper (70) unmittelbar durch ein gas wie Luft an- und durchströmbar (Pfeile 72 und 74). Hierzu ist der Körper (70) auf z.B. eine Arbeitsbühne (76) angeordnet und entsprechend dem Ausführungsbeispiel die Fig. 1 und 2 von einer Welle (52) drehbar um seine Längsachse angeordnet.

Eine der Stirnflächen des eine Quaderform aufweisenden Körpers (70) ist als Blindfläche (78) ausgebildet, wohingegen die gegenüberliegende nicht näher bezeichnete Stirnfläche mit einem Abluftkanal (80) verbunden ist, über die die Abscheiderflächen (14), (16), (18) und (20) durchströmten Gase abgesaugt werden. Hierdurch ist sichergestellt, daß das zu reinigende Abgas ausschließlich die Abscheiderflächen (14), (16), (18) und (20) durchdringt, so daß dem Abluftkanal (80) nur im hinreichenden Umfang gereinigtes Gas zugeführt wird.

Die Abscheiderflächen (14), (16), (18) und (20) sind aus Profilelementen aufgebaut, wie sie im Zusammenhang mit den Fig. 1 und 2 und ergänzend durch die Europäische Patentanmeldung 0 206 204 beschrieben sind.

Durch die Ausgestaltung nach der Fig. 3 ist ebenfalls die Möglichkeit gegeben, daß die Abscheiderflächen vor Ort, also am Installationsort gereinigt werden können. Hierzu ist es nur erforderlich, daß der Körper (70) mittels z.B. der an der Stirnfläche (78) vorhandenen Griffe (82) erfaßt und so gedreht wird, daß stets eine Abscheiderfläche z.B. dem Strahl eines Hochdruckreinigungsgerätes ausgesetzt ist. Da die einzelnen Profilelemente lösbar in den Abscheiderflächen (14), (16), (18) und (20) angeordnet sind, ist ferner ein problemloses Reinigen der Außenseite der innenliegenden Profilelemente und die Innenseiten der außenliegenden Profilelemente möglich, die über die Öffnung mit den Reinigungsfluiden erreichbar sind. Die Außenseite der außenliegenden und die Innenseite der innenleigenden Profilelemente werden durch das von außen auf die Abscheiderfläche treffende Reinigungsfluid gesäubert. Hierzu bedarf es nur der Entfernung einiger Profilelemente, wie es durch die Freiräume (84) und (86) in Fig. 3 angedeutet ist. Das Reinigungswasser selbst wird auf der dem Körper (70) zugewandten Fläche der Arbeitsbühne (76) gesammelt und über den Ablaß (25) abgeleitet.

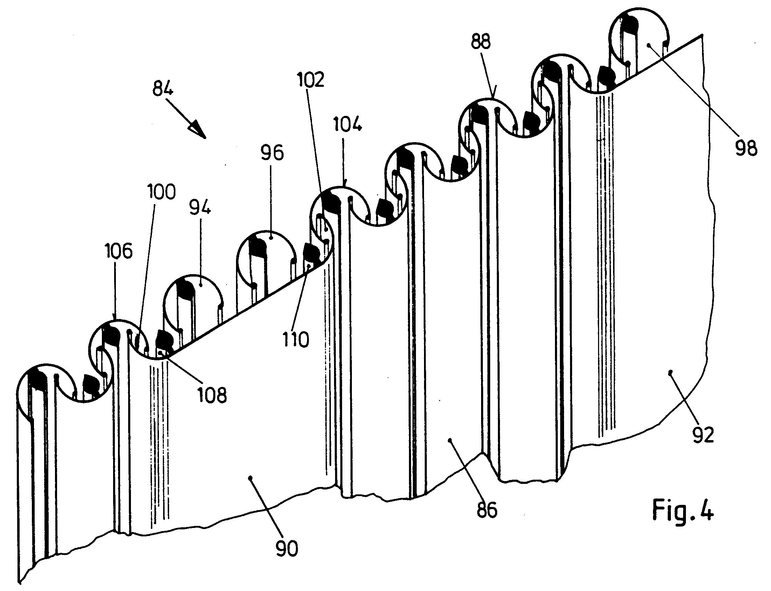

Der Fig. 4 ist eine eigenständige Lösung zu entnehmen, durch die die Möglichkeit geschaffen wird, die Anströmgeschwindigkeit bei gleichbleibender Abluft zu regulieren. Der dargestellte Ausschnitt einer Abscheiderfläche (86) umfaßt Profilelemente (86) und (88), wie sie im Zusammenhang mit den zuvor beschriebenen Abscheiderflächen vorhanden und auch ausführlich in der Europäischen Patentanmeldung 0 206 204 erläutert worden sind. Mit anderen Worten greifen die Profilelemente (88), die nicht näher bezeichnete innere in Längsrichtung der Profilelemente (86) und (88) verlaufende Vorsprünge aufweisen, ineinander, um so durch Kammerausbildungen die hindurchströmenden Fluide derart zu beschleunigen bzw. zu verlangsamen, daß im erforderlichen Umfang eine Abscheidung und damit Reinigung erfolgt.

Bereichsweise sind nun die Profilelemente durch Abdeckelemente (90) und (92) abgedeckt, so daß die Fläche, die als Durchtritt für die zu reinigenden Fluide zur Verfügung steht, verkleinert und damit die Anströmgeschwindigkeit erhöht wird. Die Abdeckungen, hinter denen die dargestellten Profilelemente (94), (96) und (98) selbstverständlich entfernt sein können, sind in ihren Randbereichen (100) und (102) entsprechend den Profilelementen (86) und (88) gebogen, um so in zugeordnete Profilelemente (104) und (106) eingreifen zu können. Ferner befinden sich im Randbereich Vorsprünge (108) und (110), die denen der Profilelemente (86) und (88) entsprechen, so daß die Abdeckelemente (90) und (92) von den Halterungen aufgenommen werden können, die auch die Profilelemente (86) halten. Mit anderen Worten ist die geometrische Anordnung der Vorsprünge (108) und (110) so gewählt, daß sie an den Orten vorliegen, an denen normalerweise Profilelemente entsprechend dem mit dem Bezugzeichen (86) versehenen anordbar und festlegbar sind.

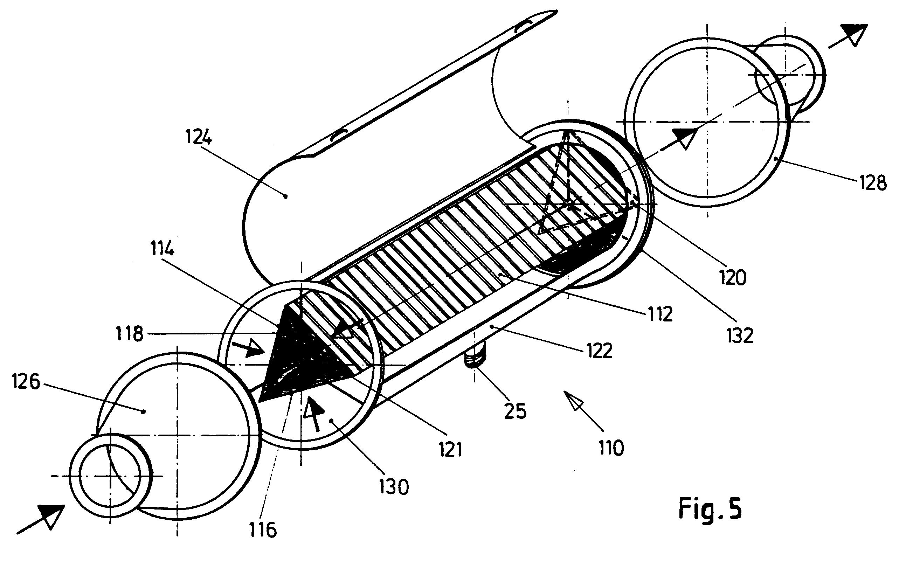

In Fig. 5 ist eine erfindungsgemäße Vorrichtung (110) dargestellt, bei der die Abscheiderflächen (112), (114) und (116) die Seitenflächen einer Dreikantsäule (118) bilden. Eine Stirnfläche (121) ist geschlossen und die gegenüberliegende als Auslaß (120) ausgebildet. Die Dreikantsäule ist von einem Zylindergehäuse (122) umgeben, so daß zunächst zwischen deren Innenwandung und der Außenfläche der Dreikantsäule das Fluid strömt, um durch die Abscheiderflächen (112), (114) und (116) hindurchzuströmen. Das Gehäuse (122) weist eine Klappe (124) auf, so daß die drehbar angeordnete Dreikantsäule gewartet und gereinigt werden kann.

Die offenen Gehäusestirnwandungen (130) und (132) sind mit trichterförmigen Ansätzen (126) und (128) versehen, die Fluidein-und auslaßöffnungen bilden. Ferner weist das Gehäuse (122) im unteren Scheitelbereich die Ablaßöffnung (25) auf.

**Patentansprüche**

1.  Vorrichtung (10, 110) zum Reinigen von gasförmigen Fluiden wie Aerosolen und Ölnebeln durch Abscheiden von in diesen vorhandenen Schmutzpartikeln umfassend zur Bildung einer Abscheiderfläche (14, 16, 18, 20, 84, 112, 114, 116) zumindest in zwei gegenüberliegenden Reihen angeordnete im Querschnitt offene rinnenförmige erste und zweite Profilteile (30, 32, 86, 88), wobei vorzugsweise die freien Längskanten der Ränder der ersten Profilteile die freien Längskanten der Ränder zweiten Profilteile überlappen und von den Innenflächen der Profilteile in Längsrichtung verlaufende Vorsprünge ausgehen, wobei die Vorrichtung (10, 110) einen geschlossenen Körper (70) mit Fluideinström- und -auströmöffnungen (24, 120) umfaßt, dessen Außenflächen zumindest bereichsweise durch die Abscheiderflächen (14, 16, 18, 20, 84, 112, 114, 116) gebildet sind, die ihrerseits die Fluideinströmöffnungen sind,
    **dadurch gekennzeichnet,**
    daß der Körper (70) drehbargelagert und ein Quader oder eine Mehrkantsäule ist, dessen Seitenflächen zumindest teilweise als Abscheiderflächen (14, 16, 18, 20, 84, 112, 114, 116) ausgebildet sind.

2.  Vorrichtung nach Anspruch 1,
    **dadurch gekennzeichnet,**
    daß eine Stirnfläche des Körpers (70) eine Blindfläche (78) und dessen andere Stirnfläche die Fluidausströmöffnung (24, 120) aufweist.

3.  Vorrichtung nach Anspruch 1,
    **dadurch gekennzeichnet,**
    daß der Körper von einem Gehäuse (12, 122) umgeben ist, daß zumindest die Abscheiderflächen (14, 16, 18, 20, 84, 112, 114, 116) des Körpers (70) zu der Gehäuseinnenwandung beabstandet sind und daß das gasförmige zu reinigende Fluid im Gehäuse von der Außenseite des Körpers her eintritt und aus dem von dem Körper umgebenden Raum (40) austritt.

4.  Vorrichtung nach Anspruch 3,
    **dadurch gekennzeichnet,**
    daß vier Abscheiderflächen (14, 16, 18, 20, 84) die Seitenflächen eines Quaders bilden, der koaxial zu der Längsachse (38) des vorzugsweise als Quader ausgebildeten Gehäuses (12) angeordnet ist, wobei bei einer quaderförmigen Gehäuseausbildung die Kanten der beiden Quader vorzugsweise um 45° versetzt zueinander verlaufen.

5.  Vorrichtung nach Anspruch 1,
    **dadurch gekennzeichnet,**
    daß drei Abscheiderflächen (112, 114, 116) die Seitenflächen einer Dreikantsäule (118) bilden, die gegebenenfalls in einem als Hohlzylinder ausgebildeten Gehäuse (122) angeordnet sind.

6.  Vorrichtung nach Anspruch 1,
    **dadurch gekennzeichnet,**
    daß die Längsachsen der Profilteile (30, 32) senkrecht zu der Längsachse (38) des Körpers bzw. des Gehäuses (12) verlaufen.

7.  Vorrichtung nach Anspruch 1,
    **dadurch gekennzeichnet,**
    daß der von den Abscheiderflächen (14, 16, 18, 20) umgebende Raum (40) außenseitig von einem Anströmelement wie Anströmkonus (42) abgedeckt ist.

8.  Vorrichtung nach Anspruch 3,
    **dadurch gekennzeichnet,**
    daß die Abscheiderflächen (14, 16, 18, 20) mit einem koaxial zur Gehäuselängsachse (38) verlaufenden Stützelement wie Rohr (52) verbunden sind, das seinerseits vorzugsweise zur drehbaren Lagerung über Streben (54, 56, 58, 60) an der Gehäuseinnenwandung abgestützt ist.

9.  Vorrichtung nach Anspruch 3,
    **dadurch gekennzeichnet,**
    daß ein Abschnitt (62, 124,) des Gehäuses (12, 122) als Revisionsdeckel ausgebildet ist.

**10.** Vorrichtung nach Anspruch 1,
**dadurch gekennzeichnet,**
daß aufeinanderstoßende Kanten von Aufnahmeelementen für die Abscheiderflächen (16, 18) Sammelrinnen (50) bilden, in die Durchbrüche zum Ableiten des abgeschiedenen Fluids eingebracht sind.

**11.** Vorrichtung nach Anspruch 3,
**dadurch gekennzeichnet,**
daß das von den Abscheiderflächen (14, 16, 18, 20, 84, 112, 114, 116) abgeschiedene Fluid in dem Gehäuse (12, 122) gesammelt und über eine Ablaßöffnung (25) nach außen geführt wird.

**12.** Vorrichtung nach vorzugsweise Anspruch 1,
**dadurch gekennzeichnet,**
daß Durchtrittsöffnungen durch die Abscheiderfläche insbesondere zur Regulierung der Anströmgeschwindigkeit bereichsweise abgedeckt sind.

**13.** Vorrichtung nach Anspruch 12,
**dadurch gekennzeichnet,**
daß Durchtrittsöffnungen verschließende Abdeckungen (90, 92) im Randbereich (100, 102) Vorsprünge (108, 110) aufweisen, die denen der Profilelemente (86) entsprechen und über die die Abdeckungen lösbar in Halterungen anordbar sind, die die Profilelemente aufnehmen.

**Claims**

**1.** A device (10, 110) for purifying gaseous fluids such as aerosols and oil sprays by depositing dirt particles therefrom, comprising open cross-section channel-shaped first and second sectional parts (30, 32, 86, 88) disposed in at least two facing rows to form a deposition surface (14, 16, 18, 20, 84, 112, 114, 116), the free longitudinal edges of the first sectional parts preferably overlapping the free longitudinal edges of the second sectional parts, and projections extend longitudinally from the inner surfaces of the sectional parts, the device (10, 110) comprising a closed body (70) with fluid inlet and fluid outlet openings (24, 120) having outer surfaces which, at least in certain regions, are formed by the deposition surfaces (14, 16, 18, 20, 84, 112, 114, 116), which in turn are the fluid inlet openings, characterised in that the body (70) is rotatably mounted and is a cuboid or a polygonal column, the sides of which are at least partly in the form of deposition surfaces (14, 16, 18, 20, 84, 112, 114, 116).

**2.** A device according to claim 1, characterised in that one end face of the body (70) is a blank surface and the other end face comprises the fluid outlet opening (24, 120).

**3.** A device according to claim 1, characterised in that the body is surrounded by a casing (12, 122), at least the deposition surfaces (14, 16, 18, 20, 84, 112, 114, 116) of the body (70) are spaced apart from the inner wall of the casing, and the gaseous fluid to be purified in the casing enters from outside the body and exits from the space (40) enclosed by the body.

**4.** A device according to claim 3, characterised in that four deposition surfaces (14, 16, 18, 20, 84) form the sides of a cuboid disposed coaxially with the longitudinal axis of the preferably cuboidal casing (12), and if the casing is a cuboid, the edges of the two cuboids are preferably offset 45° from one another.

**5.** A device according to claim 1, characterised in that three deposition surfaces (112, 114, 116) form the sides of a triangular column (118), which is optionally disposed in a hollow cylindrical casing (122).

**6.** A device according to claim 1, characterised in that the longitudinal axes of the sectional parts (30, 32) extend at right angles to the longitudinal axis (38) of the body or the casing (12).

**7.** A device according to claim 1, characterised in that the space (40) surrounded by the deposition surfaces (14, 16, 18, 20) is externally covered by an oncoming flow element such as a cone (42).

**8.** A device according to claim 3, characterised in that the deposition surfaces (14, 16, 18, 20) are connected to a supporting element such as a tube (52) extending coaxially with the longitudinal axis (38) of the casing and in turn supported on the inner wall of the casing via struts (54, 56, 58, 60) constituting a rotary mounting.

**9.** A device according to claim 3, characterised in that a portion (62, 124) of the casing (12, 122) forms an inspection cover.

**10.** A device according to claim 1, characterised in that abutting edges of elements receiving the deposition surfaces (16, 18) form collecting channels (50), in which apertures are made for discharging the deposited fluid.

**11.** A device according to claim 3, characterised in that fluid deposited by the deposition surfaces (14, 16, 18, 20, 84, 112, 114, 116) is collected in the casing (12, 122) and conveyed to the exterior through a discharge opening (25).

**12.** A device according to claim 1, characterised in that openings through the deposition surface are covered in some regions, more particularly for regulating the oncoming flow.

**13.** A device according to claim 12, characterised in that coverings (90, 92) which close through openings are formed in the edge region (100, 102) with projections (108, 110) which correspond to the projections on the sectional elements (86) and over which the coverings are releasably disposable in holders which receive the sectional elements.

## Revendications

**1.** Dispositif (10, 110) pour nettoyer des fluides gazeux tels que des aérosols et des brouillards d'huile pour séparer les particules de crasse qu'ils contiennent comprenant, pour former une surface de séparation (14, 16, 18, 20, 84, 112, 114, 116) au moins deux rangées opposées de premier et second profilé (30, 32, 86, 88) à section ouverte en forme de goulotte, et de préférence les arêtes longitudinales libres des bords du premier profilé chevauchant les arêtes longitudinales libres des bords du second profilé, et des parties en saillie partant des surfaces intérieures des profilés dans la direction longitudinale, le dispositif (10, 110) comprenant un corps fermé (70) avec des orifices d'entrée et de sortie de fluide (24, 120) dont les surfaces extérieures sont formées au moins par zone par les surfaces de séparation (14, 16, 18, 20, 84, 112, 114, 116) qui constituent eux-mêmes les orifices d'entrée de fluide, dispositif caractérisé en ce que les corps (70) sont montés à rotation et sont réalisés sous la forme d'une colonne de section carrée ou polygonale dont les surfaces latérales formant au moins partiellement des surfaces de séparation (14, 16, 18, 20, 84, 112, 114, 116).

**2.** Dispositif selon la revendication 1, caractérisé par une surface frontale du corps (70) qui comporte une surface de liaison (78) et dont l'autre surface frontale est constitué par l'orifice de sortie de fluide (24, 120).

**3.** Dispositif selon la revendication 1, caractérisé en ce que le corps est entouré par un boîtier (12, 122) et en ce qu'au moins les surfaces de séparation (14, 16, 18, 20, 84, 112, 114, 116) du corps (70) sont à une certaine distance de la paroi intérieure du boîtier et en ce que le fluide gazeux à nettoyer pénètre dans le boîtier par le côté extérieur du corps et sort d'un volume (40) entourant ce corps.

**4.** Dispositif selon la revendication 3, caractérisé en ce que quatre surfaces de séparation (14, 16, 18, 20, 84) forment les surfaces latérales d'un carré disposées coaxialement à l'axe longitudinal (38) du boîtier (12) réalisé de préférence en forme de carré et dans le cas d'une réalisation de boîtier en forme de carré, les arêtes des deux carrés sont de préférence décalées de 45°.

**5.** Dispositif selon la revendication 1, caractérisé en ce que trois surfaces de séparation (112, 114, 116) forment des surfaces latérales d'une colonne à trois arêtes (118) qui sont le cas échéant placées dans un boîtier (122) en forme de cylindre creux.

**6.** Dispositif selon la revendication 1, caractérisé en ce que les axes longitudinaux des profilés (30, 32) sont perpendiculaires à l'axe longitudinal (38) du corps ou du boîtier (12).

**7.** Dispositif selon la revendication 1, caractérisé en ce que le volume (40) entouré par les surfaces de séparation (14, 16, 18, 20) est recouvert extérieurement par un élément d'écoulement d'arrivée tel qu'un cône d'arrivée (42).

**8.** Dispositif selon la revendication 3, caractérisé en ce que les surfaces de séparation (14, 16, 18, 20) sont reliées à un élément d'appui tel qu'un tube (52) coaxial à l'axe longitudinal (38) du boîtier, le tube (58) étant appuyé à son tour de préférence contre la paroi intérieure du boîtier pour le montage à rotation par l'intermédiaire d'entretoises (54, 56, 58, 60).

**9.** Dispositif selon la revendication 3, caractérisé en ce qu'un segment (62, 124) du boîtier (12, 122) est en forme de couvercle permettant les interventions.

**10.** Dispositif selon la revendication 1, caractérisé en ce que les arêtes venant bout à bout des éléments de réception des surfaces de séparation (16, 18) forment des goulottes collectrices (50) munies de passages pour évacuer le fluide qui a été séparé.

**11.** Dispositif selon la revendication 3, caractérisé en ce que le fluide séparé par les surfaces de séparation (14, 16, 18, 20, 84, 112, 114, 116) est collecté dans le boîtier (12, 122) et est conduit à l'extérieur par l'intermédiaire d'un orifice de sortie (25).

**12.** Dispositif notamment selon la revendication 1, caractérisé en ce que les orifices de sortie à travers la surface de séparation sont recouverts partiellement notamment pour régler la vitesse d'écoulement d'arrivée.

**13.** Dispositif selon la revendication 12, caractérisé en ce que les moyens de recouvrement (90, 92) des orifices de passage comportent dans la zone marginale (100, 102) des parties en saillie (103, 110) qui correspondent à ceux des éléments profilés (86) et qui reçoivent les éléments profilés et par lesquels les moyens de recouvrement sont montés de manière amovible dans les moyens de fixation.

Fig.2

Fig.1

EP 0 306 807 B1

Fig.3

Fig.4

EP 0 306 807 B1

Fig.5